# EUROPÄISCHE PATENTSCHRIFT

(11) **EP 2 369 912 B1**
(45) Veröffentlichungstag und Bekanntmachung des Hinweises auf die Patenterteilung: **26.02.2014**
(21) Anmeldenummer: 09765147.5
(22) Anmeldetag: 11.12.2009
(51) Int. Cl.: B26D 3/22, B26D 9/00, B26D 1/56, B26D 1/15, A01J 27/04

(54) **SCHNEIDEN VON STÜCKEN AUS EINER KÄSEMASSE**
CUTTING PIECES OUT OF A MASS OF CHEESE
DÉCOUPAGE DE MORCEAUX DANS UNE MASSE DE FROMAGE

(30) Priorität: 11.12.2008 DE 102008061330
(43) Veröffentlichungstag der Anmeldung: 05.10.2011
(73) Patentinhaber: Hochland SE, 88178 Heimenkirch (DE)
(72) Erfinder: BIGGEL, Andreas, 88145 Hergatz (DE); ZEUSCHNER, Roland, 88260 Argenbühl (DE)
(74) Vertreter: Braun-Dullaeus, Karl-Ulrich
(86) Internationale Anmeldenummer: PCT/EP2009/066991
(87) Internationale Veröffentlichungsnummer: WO 2010/066897

(56) Entgegenhaltungen:
- DE-A1- 2 161 211
- DE-A1- 19 807 497
- DE-A1-102007 063 295
- US-A- 4 193 272
- US-A1- 2005 005 745

## Beschreibung

Die Erfindung betrifft ein Verfahren zum Schneiden von Stücken vorgebbarer Länge ("Sticks") aus einer Käsemasse, wobei die Käsemasse in einem kontinuierlichen Prozess zu einem breiten Käseband vorbestimmter Stärke geformt wird, wobei das Käseband mittels eines Förderbandes mit Fördergeschwindigkeit einer Schneideinrichtung zugeführt wird, und wobei das Käseband mit Mitteln zum Längsschneiden zunächst in parallel nebeneinander liegende Längsstreifen geschnitten wird. Die Erfindung betrifft außerdem eine Vorrichtung zur Umsetzung des Verfahrens.

Generell ist das Längsschneiden solcher breiter Bänder von Schmelzkäse aus einer Reihe von Dokumenten bekannt. Beispielhaft sei auf die DE-OL 2 161 211 hingewiesen, die das Längsschneiden eines breiten Schmelzkäsebandes mittels runder Scheibenklingen offenbart, die im vorgegebenen Abstand auf einer Achse angeordnet sind, wobei nach dem Längsschneiden eine entsprechende Anzahl schmalerer Längsstreifen vorliegen. Wie beispielsweise aus dem US 5,601,855 bekannt ist, werden die auf diese Weise geschnittenen Längsstreifen nach dem Längsschneiden durch eine mit Schneiden bestückte Walze in Querrichtung zu Käsespänen oder kleine Käsewürfelchen zerschnitten.

Bei den bekannten Vorrichtungen neigt die dünne Lage des pastösen Schmelzkäses respektive des weichen Mozzarella Käses aufgrund der klebrigen Konsistenz stark dazu, an den Schneidwalzen festzukleben. Um beispielsweise zu vermeiden, dass sich die geschnittenen Lebensmittelbänder nicht mit den Schneidwalzen aufwickeln, sind entsprechende Abstreifmittel notwendig, die mit Fingern zwischen die Schneidscheiben fassen und das klebrige Produkt aus der Schneidwalze herausleiten. Wegen des erheblichen Berührungskontaktes kommt es dabei zu starken Verunreinigungen an den einzelnen Elementen, so dass diese oft ausgetauscht und gereinigt werden müssen.

Bei den bekannten gattungsgemäßen Vorrichtungen handelt es sich damit auch weniger um einen kontrollierten Schneidvorgang zur Anfertigung einzelner Stücke definierter Größe, als um eine Art häckselnde Zerkleinerung des Käsebandes, bei der die Größe der anfallenden Späne auch nur in Massen einstellbar ist. Solcherart in Brösel geschnittener Käse wird insbesondere in Tüten abgefüllt und vom Endverbraucher zum Bestreuen von zu überbackenden Mahlzeiten, wie beispielsweise Pizza, verwendet. Dabei ist die Stärke des solchermaßen zu bearbeitenden Käsebandes ein bislang stark limitierender Faktor, wobei die Stärke des Käsebandes bei nur wenigen Millimetern liegt. Größere Stärken zu verarbeiten ist insbesondere mit der bekannten Art des Querschneidens bislang nicht möglich, da es auch zu einer starken Haftung des Produktes an den Querschneidklingen kommt.

Die US 2005/005745 A1 beschreibt eine Schneidvorrichtung zum Schneiden von Käse. Die Vorrichtung umfasst ein Schneidemesser, welches eine auf einem Förderband herangelieferte Käsemasse quer zur Förderrichtung schneidet. Das Schneidmesser vollzieht eine elliptische Bewegung, so dass das Messer neben einer Auf- und Abbewegung auch eine Bewegung in Förderrichtung des Käses vollzieht. Die unterschiedlichen Bewegungskomponenten sind miteinander gekoppelt.

Aufgabe der vorliegenden Erfindung ist es nunmehr, ein technisch einfach umsetzendes Verfahren und eine kompakte Vorrichtung zu schaffen, die das kontrollierte Schneiden eines Käsebandes in einzelne Stücke ermöglicht, wobei Verfahren und Vorrichtung bei großer Wartungsfreundlichkeit und hohen Standzeiten die Möglichkeit bieten, Stücke einstellbarer Dimensionen zu schneiden und der Weiterverarbeitung zuzuführen. Das Verfahren sowie die Vorrichtung sollen möglichst einfach an geänderte Produktvorgaben angepasst werden können.

Diese Aufgaben werden durch das Verfahren mit den kennzeichnenden Merkmalen des Anspruch 1 und die Vorrichtung nach Anspruch 7 gelöst. Besondere Ausführungsformen sind in den jeweiligen Unteransprüchen genannt.

Der Erfindung liegt zunächst der Ansatz zu Grunde, die vermeintlichen Schwierigkeiten beim Schneiden, die sich aus der weichen und klebrigen Konsistenz des Käses (nachfolgend auch "Produkt") ergeben, zu vernachlässigen und ihn auf eine Art zu bearbeiten, die an sich für härtere respektive steifere Produkte mit größerer Schnittfestigkeit geeignet erscheint. Dieser Ansatz führt zu dem besonderen Grundgedanken der Erfindung, nämlich das Querschneiden der aus dem Käseband geschnittenen Streifen in einer stanzenden in ihren Komponenten einstellbaren Bewegung auf dem Förderband durchzuführen, wobei das stanzende Querschneidmesser während des Schneid- oder Stanzvorganges mit dem Käseband in Fördergeschwindigkeit mitgeführt wird, so dass ein durchgängiger vertikaler Schnitt durch das Produkt entsteht.

Erfindungsgemäß wird das Verfahren dadurch umgesetzt, dass die auf dem Förderband parallel nebeneinander liegenden und vollständig geschnittenen Längsstreifen mittels des Querschneidmittels in Stücke einstellbarer Größe geschnitten werden, wobei das Querschneidmittel ein zumindest teilweise das Käseband überbrückendes und beim Schneiden in Fördergeschwindigkeit mitgeführtes und in seiner Bewegung einstellbares Querschneidmesser aufweist. Ein wesentlicher Aspekt ist zudem, dass die nach dem Längsschneiden und dem Querschneiden entstandenen Käsestücke zunächst auf dem Förderband (in geordneter Lage) verbleiben und von dem Förderband aus der Schneideinrichtung heraus geführt werden. Dabei haben ausführliche Versuche gezeigt, dass diese Art des für Käse "untypischen" Schneidens zu einem tadellosen Endprodukt, nämlich zu exakt geschnittenen Stücken definierter Größe, führt.

Die mitführende Bewegung wird dadurch bewerkstelligt, dass die Komponente entlang der Förderrichtung ("x-Achse") und die andere, dazu vertikale Komponente in Richtung des Förderbandes ("z-Achse") unabhängig voneinander angesteuert werden. Durch diese Ansteuerung ist es einerseits möglich, Käsestücke beliebiger Größe anzufertigen. Die Ansteuerung bietet sogar die Möglichkeit, die einzelnen Käsestücke durch eine Verschiebung in Förderrichtung entlang des Bandes voneinander zu trennen.

Die Besonderheit der erfindungsgemäßen Vorgehensweise liegt also darin, dass ein formatgenaues Schneiden von "Sticks" aus industriell gefertigtem Käse, insbesondere aus Schmelzkäse oder Mozzarella, möglich ist. Diese, das Endprodukt bildende Sticks können in einem nachfolgenden Verarbeitungsschritt einzeln oder zu mehreren verpackt werden. Ein besonderer Vorteil der erfindungsgemäßen Vorrichtung ist, dass sie problemlos und platzsparend als Modul in jeden kontinuierlichen Fertigungsablauf eingefügt werden kann. Dabei steht zu Beginn des Fertigungsablaufs die kontinuierliche Formung des Käsebandes in einer Formvorrichtung. Diese kann Walzen oder Stahlbänder aufweisen, die das erhitzte flüssige Produkt zu dem Käseband walzen und dieses bis auf unter Zimmertemperatur beispielsweise auf eine Temperatur zwischen 6°C und 10°C herunterkühlen. Temperaturen dieser Größenordnung haben sich als besonders vorteilhaft erwiesen.

Um den flexiblen Einbau in einen Fertigungsablauf zu ermöglichen, weist die erfindungsgemäße Vorrichtung an ihrem vorderen Zulauf und am hinteren Auslauf entsprechende Übergabemittel auf. In einer vorteilhaften Ausführungsform sorgt eine scharfe Bandumlenkung am Auslauf für eine produktschonende und geordnete Übergabe des Produktes zur Weiterverarbeitung. Wie erwähnt, liegt ein besondere Vorteil darin, dass die erfindungsgemäße Vorrichtung kompakt aufgebaut ist und eine gute Mobilität gewährleistet. Dabei können besonders vorteilhafte Ausführungsformen trotz kurzer Baulänge ein Produktband von einer Bandbreite von mehr als einem Meter und einer Stärke von einigen Zentimetern verarbeiten.

Ein weiterer Vorteil der Vorrichtung ist, dass sie den hohen Anforderungen an die Hygiene, die gerade bei der Verarbeitung von Käse bestehen, genügt, da sich die Vorrichtung wegen ihres ihrerseits modularen Aufbaus besonders gut reinigen lässt. Zudem bieten die das Produkt beaufschlagenden Komponenten wegen des zweckmäßigen und schlichten Designs dem Produkt kaum die Möglichkeit des Anhaftens. Zudem ist ein schnell zu entspannendes und austauschbares Förderband ein Garant für die komfortable und gründliche Reinigung. Insgesamt bietet die Erfindung nicht nur eine Optimierung der Funktionalität, sondern auch eine Verringerung der Kosten, eine Verlängerung der Lebensdauer bei geringem Verschleiß, eine Verbesserung der Hygiene und der Sicherheit.

Wie dargelegt, liegt die Besonderheit der Erfindung darin, dass sich erstmals aus industriell produziertem Käse einzelne Stücke in beliebiger Form und Dimension schneiden lassen. Insbesondere lassen sich riegelförmige Sticks von weit über einem Zentimeter Höhe und Breite mit einer an sich beliebigen Länge schneiden. Gerade das erfindungsgemäße stanzende Querschneiden macht es möglich, ein Produktband von mehr als einem Zentimeter Stärke zu schneiden. Insbesondere bei der besonders vorteilhaften Ausführungsform, die eine beidseitige Führung und einen beidseitigen Antrieb der Aufnahme des Querschneidmessers aufweist, sind der Breite des zu verarbeitenden Produktbandes kaum Grenzen gesetzt.

In einer besonders vorteilhaften Ausführungsform wird die Länge des Querschneidmessers so bemessen, dass es lediglich die erwünschten Sticks schneidet, jedoch nicht den oder die am Käseband verbleibenden Randstreifen. Diese bleiben dann als solche erhalten und werden vorteilhafterweise über einen Abweg vom Förderband entfernt und zur separaten Weiterverarbeitung, insbesondere zur Wiederverwertung, von der Vorrichtung abgeführt. Auf diese Weise kann eine große Effektivität bei der Produktion erreicht werden.

Um die Schnitte des Querschneidmessers beliebig und genau einstellen zu können, ist es besonders vorteilhaft, wenn die Bewegung des Querschneidmessers beim Querschneiden in eine Komponente entlang der Förderrichtung ("x-Achse") und in eine Komponente vertikal dazu in Schnittrichtung ("z-Achse") zerlegt wird und wenn beide Bewegungskomponenten voneinander unabhängig angesteuert werden. Mit einer solchen Steuerung kann die Länge der Käsestücke über die Ansteuerung der Bewegungen im Verhältnis zur Fördergeschwindigkeit exakt eingestellt werden. Der Schnitt kann durch die Steuerung auch optimal auf das Produkt und auf das Förderband justiert werden.

Zudem kann, wie beschrieben, eine Relativbewegung gegenüber dem Förderband erzeugt werden, so dass die geschnittenen Stücke um ein Stückchen nach vorne vom Käseband "abgeschoben" werden können, was die spätere Trennung vereinfacht. Auch ist es möglich, den Schnitt gegenüber der unter dem Querschneidmesser angeordneten Gegendruckwalze um ein Stückchen noch vorn oder nach hinten zu verschieben, womit sich die Schnittqualität verbessern lässt. Diese Möglichkeit wird vor allem auch durch das flexible Förderband eröffnet, das beim Schnitt entsprechend nachgeben kann.

Ein ganz wesentlicher weiterer Gesichtspunkt ist, dass das Querschneidmesser eine Flexibilität aufweist, die eine Biegung in Z-Richtung ermöglicht. Damit kann die Geometrie des Querschneidmessers auf das Schneiden gegen das Förderband optimiert werden. Die Einstellung einer solchen Biegung in Z-Richtung erfolgt dabei über Stellmittel, wie Schrauben, die insbesondere in einem gewissen Abstand über die Länge des Querschneidmessers verteilt sind.

Um beim Querschneiden ein Abheben des Produktes vom Förderband zu vermeiden, ist es vorteilhaft, wenn die Längsstreifen und die aus dem Schnitt entstandenen Käsestücke beim Querschneiden mittels eines in geringem Abstand zur Oberfläche des geschnittenen Käsebandes angeordneten oder auf der Oberfläche aufliegenden und mit Fördergeschwindigkeit entlang der X-Achse mitgeführten Niederhalters beaufschlagt werden. Dieser hält das Produkt während des Querschneidens fest, bis sich das Querschneidmesser aus der Käsemasse zurück gezogen hat. Der Niederhalter hat eine Höheneinstellung, damit er auf die Produktoberfläche eingestellt werden kann. Die Höheneinstellung ist vorteilhafterweise im Betrieb von außen manuell verstellbar.

Beim Längsschneiden wird das Produkt, insbesondere der Schmelzkäse oder der Mozzarella, vorteilhafterweise mit schnell laufenden Schneidblättern in Längsstreifen geschnitten, die mit einem oder mit mehreren Zähnen versehen sind. Dabei ist die Zahnhöhe größer als die Stärke des Käsebandes und die Drehgeschwindigkeit der Schneidblätter im Verhältnis zur Fördergeschwindigkeit so eingestellt, dass ein Zahn beim Schneiden mit der Zahnspitze in das Lebensmittelband abtaucht und einen Schlitz bestimmter Schlitzlänge in dem sich in derselben Richtung bewegenden Käseband verursacht. Der durch den nachfolgenden Zahn verursachte Schlitz schließt, wie beim Sägen, an den vorangehenden Schlitz an. Solche Schneidblätter bieten wenig Berührungsfläche und schlitzen das Käseband quasi "nur" mit den Zahnspitzen. Die gezahnten Schneidblätter haben den wesentlichen Vorteil, dass beim Schnitt der Kontakt mit dem Produkt zwischenzeitlich unterbrochen ist, so dass die Reibung zwischen den Schneidblättern und dem Produkt stark reduziert ist. Zudem ist bei den in geringem Abstand parallel angeordneten Schneidblättern die für das Produkt wirksame Klemmfläche auf ein Minimum beschränkt.

Vorteilhafterweise ist das Längsschneidmittel vermittels Gasdruckfedern nach oben heraus schwenkbar, so dass die Reinigung und der Formatwechsel erleichtert ist und zudem eine sichere und ergonomische Bedienung gewährleistet ist.

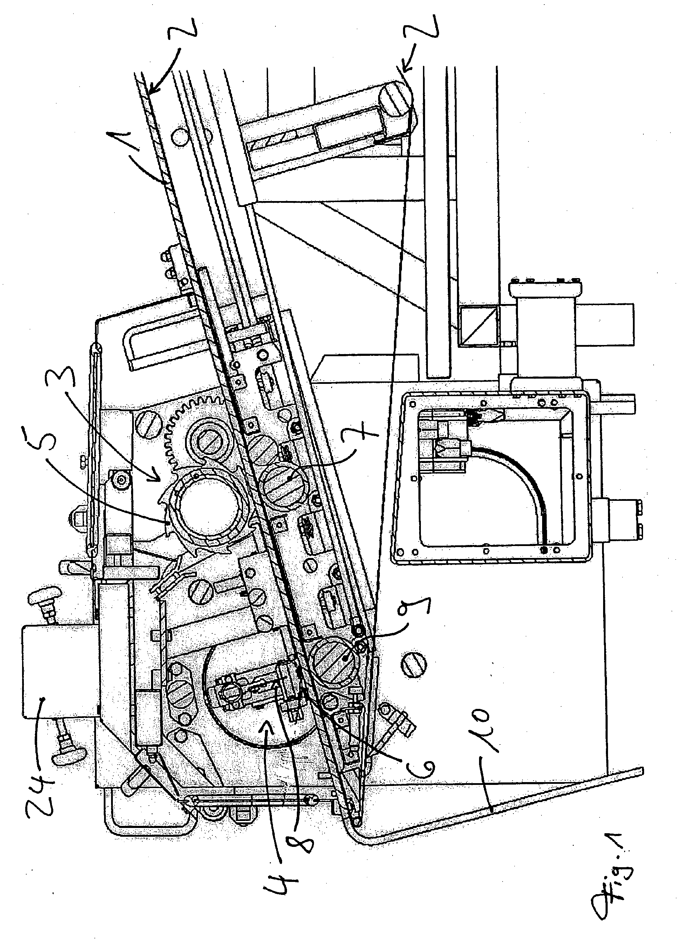

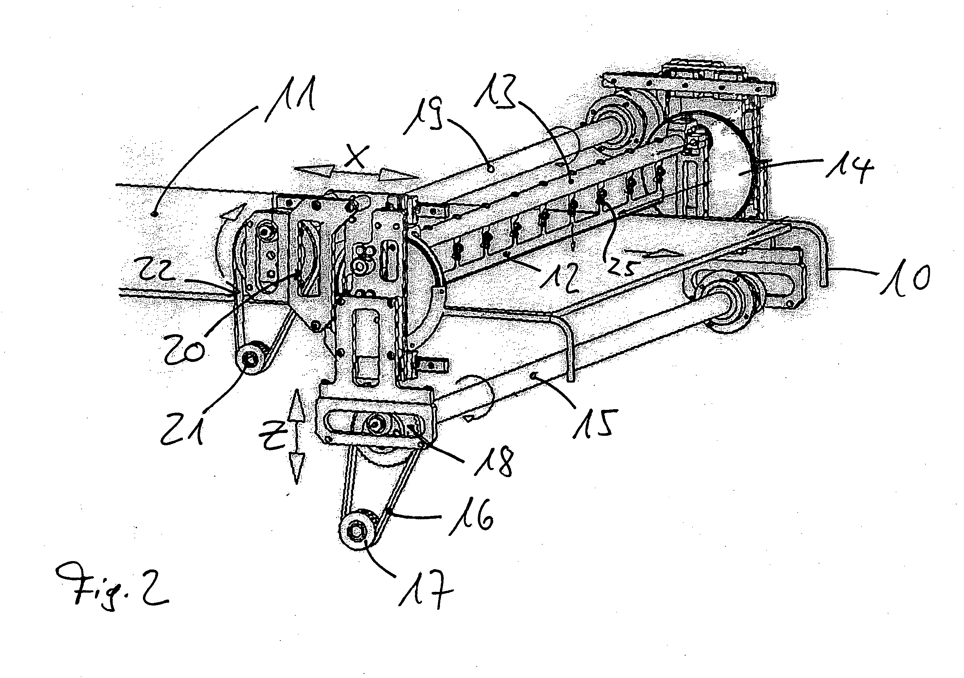

Nachfolgend wird die Erfindung anhand der Figuren 1 und 2 näher erläutert. Es zeigen:
- **Figur 1:**: einen Schnitt durch die erfindungsgemäße Vorrichtung und
- **Figur 2:**: eine Ansicht der Querschneidvorrichtung

Figur 1 zeigt eine erfindungsgemäße Vorrichtung zum Schneiden von Stücken vorgebbarer Länge aus einer Käsemasse, die in einem vorangestellten Verfahrensschritt zu einem Käseband 1 geformt und dem mit Fördergeschwindigkeit laufenden endlosen Förderband 2 zugeführt wurde. Die Vorrichtung umfasst ein Längsschneidmittel 3 und ein in Förderrichtung dahinter angeordnetes Querschneidmittel 4.

Das Längsschneidmittel 3 hat mit jeweils mehreren Zähnen versehene Schneidblätter 5, die sich in Förderrichtung drehen, jedoch mit einer gegenüber der Fördergeschwindigkeit erhöhten Drehgeschwindigkeit. Unterhalb der Schneidblätter 5 ist unter dem Förderband 2 eine Gegendruckwalze 7 vorgesehen, die das Gegenlager zum Schneiden bildet. Das komplette Längsschneidmittel 3 ist über Gasdruckfedern nach oben verschwenkbar, so das es einfach zu reinigen ist. Bei nach oben verschwenktem Längsschneidmittel 3 und bei Entspannung lässt sich das Förderband als komplettes Modul ausbauen.

Vom Querschneidmittel 4 ist in Figur 1 ein Schnitt durch das Querschneidmesser 8 zu erkennen, das seinerseits gegen eine Gegendruckwalze 9 schneidet. Zu erkennen sind jedoch die nicht geschnittenen Randstreifen 10 des Käsebandes 1, die in diesem Fall nach unten abgeführt und der Wiederverwertung zugeführt werden. Zur Erzeugung eines Schnittspalts zwischen Produkt und Querschneidmesser ist das Auslaufmodul leicht geneigt. Zu erkennen ist auch der "mitfahrende" Niederhalter 6, der vermittels der Einstellvorrichtung 24 manuell justierbar ist.

In Figur 2 sind Details des Querschneidmittels gezeigt: Zu erkennen ist das angedeutete Käseband 11, dessen Längsschnitte jedoch nicht zu sehen sind. Das Querschneidmittel weist ein einen Teil des Käsebandes 11 überbrückendes Querschneidmesser mit einer durchgängigen Klinge 12 auf, die an einem Messerträger 13 gehalten ist. Dazwischen sind in einem Abstand angeordnete Stellschrauben 25 vorgesehen, die eine Justierung des flexiblen Querschneidmessers in Z-Richtung ermöglichen.

Das Querschneidmesser wird mit einem Exenterantrieb gesteuert, der auf beiden Seiten durch einen Deckel 14 abgedeckt ist. Die Exzentrizität ist in vier Stufen einstellbar. Der Excenterantrieb verursacht eine Bewegung des Querschneidmessers in Schnittrichtung der z-Achse (Pfeil), wobei die Excenterwelle 15 vermittels eines Riemens 16 von einem Servomotor 17 angesteuert wird. Die Excenterwelle 15 wird in Führungen 18 in Förderrichtung mitgeführt. Für die Bewegung in Förderrichtung entlang der x-Achse (Pfeil) ist eine weitere Excenterwelle 19 vorgesehen, die beidseitig in Führungen 20 geführt und ebenfalls von einem Servomotor 21 vermittels eines Riemens 22 angetrieben wird.

Somit kann die Bewegung des Querschneidmessers in eine Komponente entlang der Förderrichtung ("x-Achse") und eine Komponente vertikal dazu in Schnittrichtung ("z-Achse") zerlegt werden, wobei der Antrieb beide Bewegungskomponenten unabhängig voneinander ansteuert. Mit dem Excenterantrieb ist ein Antrieb für das Querschneidmesser vorhanden, der während des Querschneidens entlang der eine Bewegung des Querschneidmessers in Fördergeschwindigkeit verursacht. Durch die getrennten Servoantriebe für die x Bewegung und die z Schneidbewegung sind verschiedene Bewegungsabläufe, -geschwindigkeiten und -parameter programmierbar. Dabei ist der Exzenterhub für jeweils mehrere Hublängen in der x und der z Achse verstellbar. Der Niederhalter 6 (Figur 1) ist mechanisch an die x Bewegung gekoppelt. Im vorliegenden Fall wird der Niederhalter 6 wenige Millimeter, insbesondere etwa 3 - 6 mm über dem Produkt justiert. Dazu ist er manuell höheneinstellbar.

## Patentansprüche

1. Verfahren zum Schneiden von Stücken vorgebbarer Länge ("Sticks") aus einer Käsemasse, wobei die Käsemasse in einem kontinuierlichen Prozess zu einem breiten Käseband (1,11) vorbestimmter Stärke geformt wird, wobei das Käseband (1,11) mittels eines Förderbandes (2) mit Fördergeschwindigkeit einer Schneideinrichtung zugeführt wird, wobei das Käseband (1,11) mit Mitteln zum Längsschneiden (5) zunächst in parallel nebeneinander liegende Längsstreifen geschnitten wird, wobei die auf dem Förderband (2) parallel nebeneinander liegenden Längsstreifen mittels eines Querschneidmittels (4) in Stücke geschnitten werden,
wobei das Querschneidmittel (4) ein zumindest einen Teil des Käsebandes (1,11) überbrückendes Querschneidmesser (12) aufweist, wobei die Bewegung des Querschneidmessers einstellbar ist, wobei das Querschneidmesser während des Querschneidens mit dem Käseband (1,11) in Fördergeschwindigkeit mitgeführt wird und wobei die nach dem Längsschneiden und dem Querschneiden entstandenen Käsestücke zunächst auf dem Förderband (2) verbleibend abgeführt werden,
wobei die Bewegung des Querschneidmessers (12) beim Querschneiden eine Komponente entlang der Förderrichtung ("x-Achse") und vertikal dazu in Schnittrichtung ("z-Achse") aufweist,
**dadurch gekennzeichnet,**
**dass** die Bewegungen in den beiden Bewegungskomponenten voneinander unabhängig angesteuert werden.

2. Verfahren nach Anspruch 1,
**dadurch gekennzeichnet,**
**dass** die Bewegung zwei Bewegungskomponenten, nämlich senkrecht und parallel zum Förderband aufweist, die unabhängig voneinander einstellbar sind.

3. Verfahren nach Anspruch 1 oder 2,
**dadurch gekennzeichnet,**
**dass** nach dem Schneiden der Käsestücke ungeschnittene Randstreifen (10) des Käsebandes (1,11) verbleiben, die vom Förderband (2) entfernt und zur separaten Weiterverarbeitung, insbesondere zur Wiederverwertung, abgeführt werden.

4. Verfahren nach Anspruch einem der vorherigen Ansprüche,
**dadurch gekennzeichnet,**
**dass** die Länge der Käsestücke über die Ansteuerung der Bewegungen im Verhältnis zur Fördergeschwindigkeit eingestellt wird.

5. Verfahren nach einem der vorherigen Ansprüche,
**dadurch gekennzeichnet,**
**dass** beim Querschneiden die Längsstreifen und die aus dem Schnitt entstandenen Käsestücke mittels eines auf oder wenige Millimeter über der Oberfläche des geschnittenen Käsebandes (1,11) angeordneten und mit Fördergeschwindigkeit mitgeführten Niederhalters (6) beaufschlagt werden, bis sich das Querschneidmesser (12) aus der Käsemasse zurück gezogen hat.

6. Verfahren nach einem der vorherigen Ansprüche,
**dadurch gekennzeichnet,**
**dass** für das Längsschneiden mit einem Zahn oder mit mehreren Zähnen versehene Schneidblätter (5) vorgesehen sind, wobei die Zahnhöhe größer als die Stärke des Käsebandes (1,11) ist, wobei die Umfangsgeschwindigkeit der Schneidblätter (5) im Verhältnis zur Fördergeschwindigkeit so eingestellt wird, dass ein Zahn beim Schneiden mit der Zahnspitze in das Käseband (1,11) abtaucht und einen Schlitz bestimmter Schlitzlänge in dem sich in derselben Richtung bewegenden Käseband verursacht, wobei der durch den nachfolgenden Zahn verursachte Schlitz wie beim Sägen an den vorangehenden Schlitz anschließt.

7. Vorrichtung zum Schneiden von Stücken vorgebbarer Länge ("Sticks") aus einer Käsemasse, insbesondere zur Durchführung des Verfahrens nach einem der vorherigen Ansprüche, aufweisend ein das Käseband (1,11) mit Fördergeschwindigkeit förderndes Förderband (2) und aufweisend eine Schneideinrichtung mit einem Längsschneidmittel (3) und einem in Förderrichtung dahinter angeordneten Querschneidmittel (4),
wobei das Querschneidmittel (4) ein zumindest einen Teil des Käsebandes (1,11) überbrückendes Querschneidmesser (12) aufweist, wobei ein Antrieb für das Querschneidmesser (12) vorgesehen ist, der während des Querschneidens eine Bewegung des Querschneidmessers (12) in Fördergeschwindigkeit verursacht, wobei die Bewegung eine Komponente entlang der Förderrichtung ("x-Achse") und eine Komponente vertikal dazu in Schnittrichtung ("z-Achse") aufweist, wobei das Querschneidmittel (4) den Schnitt auf dem bewegten Förderband (2) durchführt, das die Käsestücke abführt,
**dadurch gekennzeichnet,**
**dass** der Antrieb beide Bewegungskomponenten unabhängig voneinander ansteuert.

8. Vorrichtung nach Anspruch 7,
**dadurch gekennzeichnet,**
**dass** das Förderband (2) und die Schneideinrichtung eine insbesondere mobile bauliche Einheit bilden, die sich modular in eine Fertigungslinie einfügen lässt.

9. Vorrichtung nach Anspruch 7 oder 8,
**dadurch gekennzeichnet,**
**dass** das Querschneidmesser eine Flexibilität aufweist, die eine Biegung in Z-Richtung ermöglicht, wobei die Biegung in Z-Richtung über Stellmittel (25) einstellbar ist.

10. Vorrichtung nach einem der Ansprüche 7 bis 9,
**gekennzeichnet durch**
einen mit Fördergeschwindigkeit zwangsgeführten Niederhalter (6) am Querschneidmesser (12).

11. Vorrichtung nach einem der Ansprüche 7 bis 10,
**dadurch gekennzeichnet,**
**dass** das Querschneidmesser (12) eine beidseitige Führung und einen beidseitigen Antrieb aufweist, wobei Antrieb und Führung eine unabhängige Ansteuerung in beiden Bewegungskomponenten ermöglichen.

## Claims

1. Method for the cutting of pieces of predetermined length ("sticks") from a cheese mass, wherein the cheese mass is shaped in a continuous process to a wide cheese band (1, 11) of predetermined thickness, wherein the cheese band (1, 11) is fed to a cutting apparatus by means of a conveyor belt (2) with conveying speed, wherein the cheese band (1, 11) is cut with means for longitudinal cutting (5) initially in longitudinal strips lying parallel next to one another, wherein the longitudinal strips lying parallel next to one another on the conveyor belt (2) are cut into pieces by means of a transverse cutting means,
wherein the transverse cutting means (4) has a transverse cutting knife (12), bridging at least a part of the cheese band (1, 11), wherein the movement of the transverse cutting knife is adjustable, wherein the transverse cutting knife is entrained with the cheese band (1, 11) at conveying speed during the transverse cutting and wherein the cheese pieces created following the longitudinal cutting and the transverse cutting initially remaining on the conveyor belt (2) are conveyed away,
wherein the movement of the transverse cutting knife (12) during transverse cutting has one component along the conveying direction ("x-axis") and vertical thereto in the cutting direction ("z-axis"),
**characterised in**
**that** movements in both movement components are controlled independently of one another.

2. Method according to claim 1,
**characterised in**
**that** the movement has two movement components, namely perpendicular and parallel to the conveyor belt, which can be set independently of one another.

3. Method according to claim 1 or 2,
**characterised in**
**that** uncut edge strips (10) of the cheese band (1, 11) remain after the cutting of the cheese pieces, which edge strips are removed from the conveyor belt (2) and conveyed away for separate further processing.

4. Method according to one of the preceding claims,
**characterised in**
**that** the length of the cheese pieces can be set by means of the controlling of the movements in relation to the conveying speed.

5. Method according to one of the preceding claims,
**characterised in**
**that**, during the transverse cutting, the longitudinal strips and the cheese pieces created from the cut acted upon by means of a hold-down device (6) arranged on or a few millimetres above the surface of the cut cheese band (1, 11) and entrained with the conveying speed until the transverse cutting knife (12) has pulled back out of the cheese mass.

6. Method according to one of the preceding claims,
**characterised in**
**that** cutting blades (5) provided with one tooth or a plurality of teeth are provided for the longitudinal cutting, wherein the tooth height is greater than the thickness of the cheese band (1, 11), wherein the circumferential speed of the cutting blades (5) is set in such a manner in relation to the conveying speed that the tooth tip of a tooth descends into the cheese band (1, 11) when cutting and brings about a slit of certain slit length in the cheese band moving in the same direction, wherein, as with saws, the slit brought about by the following tooth adjoins the previous slit.

7. Device for the cutting of pieces of predetermined length ("sticks") from a cheese mass, particularly for carrying out the method according to claim 1, having a conveyor belt (2) conveying the cheese band (1, 11) with conveying speed and having a cutting apparatus with a longitudinal cutting means (3) and a transverse cutting means (4) arranged downstream thereof in the conveying direction,
wherein the transverse cutting means (4) has a transverse cutting knife (12), bridging at least a part of the cheese band (1, 11), wherein a drive is provided for the transverse cutting knife (12), which brings about a movement of the transverse cutting knife (12) at conveying speed during the transverse cutting, wherein the movement has one component along the conveying direction ("x-xis") and one component vertical thereto in the cutting direction ("z-axis"), wherein the transverse cutting means (4) carries out the cut on the moved conveyor belt (2) which conveys the cheese pieces away,
**characterised in**
**that** the drive controls both movement components independently of one another,

8. Device according to claim 7,
**characterised in**
**that** the conveyor belt (2) and the cutting apparatus form an in particular mobile structural unit, which can be inserted into a production line in a modular manner.

9. Device according to claim 7 or 8,
**characterised in**
**that** the transverse cutting knife has a flexibility, which enables a bending in the z-direction, wherein the bending in the z-direction can be set by means of adjustment means (25).

10. Device according to any of claims 7 to 9,
**characterised by**
a hold-down device, which is forcibly guided with conveying speed on the transverse cutting knife (12).

11. Device according to any of claims 7 to 10,
**characterised in**
**that** the transverse cutting knife (12) has a bilateral guide and a bilateral drive, wherein drive and guide enable an independent controlling in both movement components.

## Revendications

1. Procédé pour le découpage de morceaux d'une longueur prédéterminable (« Sticks ») dans une masse de fromage, dans lequel la masse de fromage est formée en un large ruban de fromage (1, 11) d'une épaisseur prédéfinie au cours d'un processus continu, dans lequel le ruban de fromage (1, 11) est alimenté au moyen d'un tapis de transport (2) avec une vitesse de transport d'un dispositif de coupe, dans lequel le ruban de fromage (1, 11) est tout d'abord découpé en bandes longitudinales disposées côte à côte parallèlement les unes aux autres, à l'aide de moyens de coupe longitudinale (5), dans lequel les bandes longitudinales disposées côte à côte parallèlement les unes aux autres sur le tapis de transport (2) sont coupées en morceaux au moyen d'un moyen de coupe transversale (4),
dans lequel le moyen de coupe transversale (4) comporte une lame de coupe transversale (12) chevauchant au moins une partie du ruban de fromage (1, 11), dans lequel le mouvement de la lame de coupe transversale peut être réglé, dans lequel la lame de coupe transversale est emportée avec le ruban de fromage (1, 11) pendant le découpage transversal, à la vitesse de transport, et dans lequel les morceaux de fromage produits après le découpage longitudinal et le découpage transversal sont tout d'abord éloignés en restant sur le tapis de transport (2),
dans lequel le mouvement de la lame de coupe transversale (12) présente une composante le long de la direction de transport (« axe x ») et verticalement à celle-ci dans la direction de coupe (« axe z »),
**caractérisé en ce que**
les mouvements dans les deux composantes de mouvement sont actionnés indépendamment l'un de l'autre.

2. Procédé selon la revendication 1,
**caractérisé en ce que**
le mouvement présente deux composantes de mouvement, notamment perpendiculairement et parallèlement au tapis de transport, qui peuvent être réglées indépendamment l'une de l'autre.

3. Procédé selon la revendication 1 ou 2,
**caractérisé en ce que**
après le découpage des morceaux de fromage, il reste des bandes de fromage (10) du ruban de fromage (1, 11) non découpées, lesquelles sont éloignées par le tapis de transport (2) et évacuées pour un traitement supplémentaire séparé, en particulier pour le recyclage.

4. Procédé selon l'une des revendications précédentes,
**caractérisé en ce que**
la longueur des morceaux de fromage est réglée par l'actionnement du mouvement par rapport à la vitesse de transport.

5. Procédé selon l'une des revendications précédentes,
**caractérisé en ce que**
pendant le découpage transversal, les bandes longitudinales et les morceaux de fromage produits par la coupe sont contraints par un dispositif de maintien vers le bas (6) agencé sur ou à quelques millimètres au-dessus de la surface supérieure du ruban de fromage (1, 11) découpé et entraînés à la vitesse de transport, jusqu'à ce que la lame de coupe transversale (12) se soit retirée de la masse de fromage.

6. Procédé selon l'une des revendications précédentes,
**caractérisé en ce que**
pour le découpage longitudinal, il est prévu des lames de coupe (5) pourvues d'une dent ou de plusieurs dents, dans lequel la hauteur de dent est supérieure à l'épaisseur du ruban de fromage (1, 11), dans lequel la vitesse périphérique des lames de coupe (5) par rapport à la vitesse de transport est réglée de telle façon qu'une dent plonge dans le ruban de fromage (1, 11) avec sa pointe pendant le découpage et produit une fente d'une longueur de fente définie dans le ruban de fromage déplacé dans la même direction, dans lequel la fente produite par la dent suivante prolonge la fente suivante, comme lors du sciage.

7. Dispositif pour le découpage de morceaux d'une longueur prédéterminable (« Sticks ») dans une masse de fromage, en particulier pour l'exécution du procédé selon l'une des revendications précédentes, comportant un tapis de transport (2) transportant le ruban de fromage (1, 11) avec une vitesse de transport, et comportant un dispositif de coupe avec un moyen de coupe longitudinale (3) et un moyen de coupe transversale (4) agencé derrière celui-ci dans la direction de transport,
dans lequel le moyen de coupe transversale (4) comporte une lame de coupe transversale (12) chevauchant au moins une partie du ruban de fromage (1, 11), dans lequel il est prévu un entraînement pour la lame de coupe transversale (12) produisant un mouvement de la lame de coupe transversale (12) à la vitesse de transport pendant le découpage transversal, dans lequel le mouvement présente une composante le long de la direction de transport (« axe x ») et une composante verticalement à celle-ci dans la direction de coupe (« axe z »), dans lequel le moyen de coupe transversale (4) exécute la coupe sur le tapis de transport (2) en mouvement qui éloigne les morceaux de fromage,
**caractérisé en ce que**
l'entraînement actionne les deux composantes de mouvement indépendamment l'une de l'autre.

8. Dispositif selon la revendication 7,
**caractérisé en ce que**
le tapis de transport (2) et le dispositif de coupe forment un bloc, en particulier mobile, apte à être inséré de façon modulaire dans une chaîne de fabrication.

9. Dispositif selon la revendication 7 ou 8,
**caractérisé en ce que**
la lame de coupe transversale présente une souplesse permettant un fléchissement dans la direction Z, dans lequel le fléchissement dans la direction Z peut être réglé par un moyen de réglage (25).

10. Dispositif selon l'une des revendications 7 à 9,
**caractérisé par**
un dispositif de maintien vers le bas (6) guidé de force à la vitesse de transport et situé sur la lame de coupe transversale (12).

11. Dispositif selon l'une des revendications 7 à 10,
**caractérisé en ce que**
la lame de coupe transversale (12) comporte un guidage bilatéral et un entraînement bilatéral, dans lequel l'entraînement et le guidage permettent un actionnement indépendant dans les deux composantes de mouvement.
